# EUROPEAN PATENT APPLICATION

(11) **EP 1 104 927 A1**
(43) Date of publication of application: **06.06.2001**
(21) Application number: 99919599.3
(22) Date of filing: 14.05.1999
(51) Int. Cl.: G11B 19/02, G11B 21/02

(54) **DISK APPARATUS**

(71) Applicant: MITSUBISHI DENKI KABUSHIKI KAISHA, Tokyo 100-8310 (JP)
(72) Inventor: MORIMOTO, Takao, Mitsubishi Denki Kabushiki Kaisha, Tokyo 100-8310 (JP)
(74) Representative: Pfenning, Meinig & Partner
(86) International application number: JP9902530
(87) International publication number: WO0070612

(57) **Abstract**

A disk device of the present invention includes a switch 136 for detecting a disk inner peripheral position of a compact disk, a projecting piece 132 formed on a slide bar 131 to detect the displacement of a movable body 115, on which an optical pickup is provided, outside the outer periphery of the compact disk and the minidisk in cooperation with the switch 136, and a linkage mechanism such as a rotation member 141 which switches a clutch 120 in response to the displacement of the movable body 115 outside the outer periphery of the disk, which is detected from the abutment of the movable body 115 with the projecting piece 132.

## Description

### TECHNICAL FIELD

The present invention relates to a disk device which can load different type of information recording media, such as a CD (compact disk) used as a single disk and an MD (minidisks) used in cartridge stored form, at different times on a turntable and eject such media from the turntable.

### BACKGROUND ART

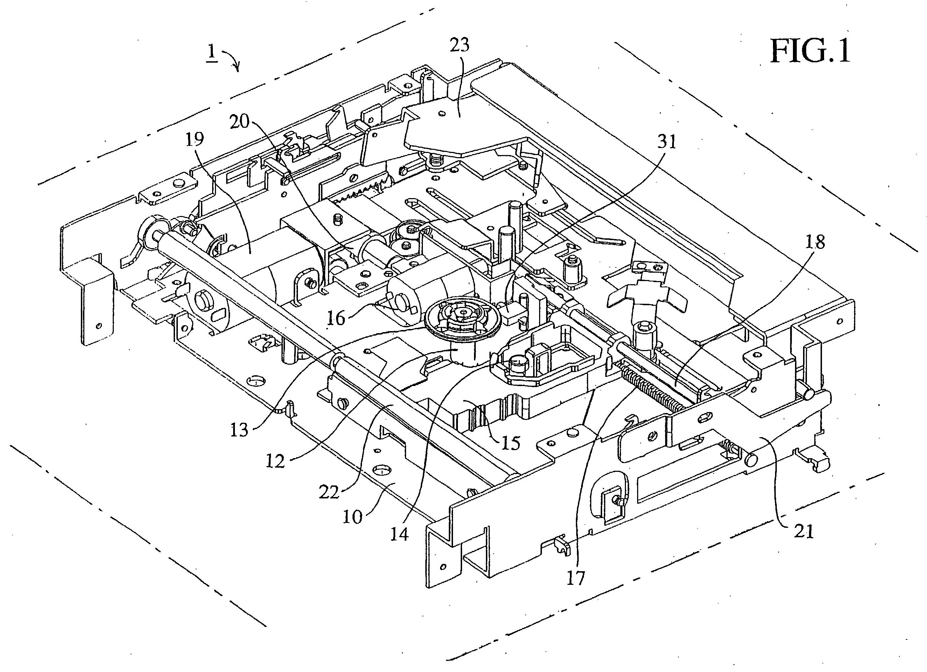

Figure 1 is a schematic view of a conventional disk device. In Figure 1, reference numeral 1 denotes a disk device which can be used in common with an MD and a CD, 10 is a chassis, 12 is a spindle motor, 13 is a turntable, 14 is an optical pickup, and 15 is a movable body on which an optical pickup 14 is provided. 16 is a motor for displacing the movable body 15, 17 is a feed screw. The feed screw 17 engages with a threaded section which is provided on the movable body 15, and the feed screw 17 is rotated by the motor 16. The movable body 15 displaces in a linear manner along the feed screw 17 by rotating the feed screw 17. 18 is a guide shaft which guides the linear displacement of the movable body 15 along the feed screw 17.

19 is a motor which acts as a drive source for the refuge operation of the CD clamp and CD adapter (not shown), for the loading operation of a CD onto the turntable by the CD adapter and the CD clamp, and for the carry-in operation of the MD holder (not shown) into the device.

20 is a clutch which switches the transmission route of the rotational force of the motor 19. The clutch 20 enables the motor 19 to act as a drive source for the refuge operation of the CD clamp and the CD adapter and for the carry-in operation of the MD holder into the device. Furthermore, the clutch 20 enables the motor 19 to act as a drive source for the loading operation of the CD onto the turntable by the CD adapter and the CD clamp. Thus, a single motor 19 can be used in common as a drive source for respective operations. Furthermore, the switching of the clutch 20 is performed by an electrical or mechanical clutch switching means which is provided separately to switch the clutch.

21 is an arm for lowering an MD (not shown), which is housed in the MD holder and is carried into the device, onto the turntable 13 after completion of the refuge operation of the CD adapter and the CD clamp.

22 is a feed roller for conveying a CD inserted from a CD and MD insertion mouth (not shown) into the device. 23 is an arm support member which pivotally supports the base of the CD adapter arm on the tip of which the CD adapter is arranged and the base of the CD clamp arm on the tip of which the CD clamp is arranged. 31 is a switch for detecting an inner peripheral position of an MD.

The operation of the conventional disk device will be explained below.

When an MD is inserted from the CD and MD insertion mouth (not shown), the inserted MD is carried into the device and set on the turntable 13. At this time, the CD adapter and CD clamp do not impede the MD in a set position. For example, these components are refuged in a predetermined position situated at the back of the device.

On the other hand, when a CD is inserted from the CD and MD insertion mouth, the inserted CD is carried into the device by the feed roller 22, its rotational center is gripped by the CD adapter and CD clamp and it is placed on the turntable 13 in that state.

When the inserted recording medium is a CD, the inserted CD is rotated on the turntable 13 and information is read out by an optical pickup 14 which displaces in the outer peripheral direction of the CD due to the displacement of the movable body 15. This operation allows both playing/recording and playing.

On the other hand, when the inserted recording medium is an MD, an aperture formed in the case of the inserted MD is opened, the recording medium disk housed in the case is rotated on the turntable 13 and information is read through the aperture by an optical pickup 14 which displaces in the outer peripheral direction of the MD due to the displacement of the movable body 15. This operation allows both playing/recording and playing.

Since the conventional disk device is constructed as above, it is required to provide an independent mechanism for switching the clutch 20 or an independent mechanism for automatically opening and closing the shutter of the CD and MD insertion mouth. As a result, the size of the disk device itself is increased due to its structural complexity, problems of reducing the size of the disk device itself, simplifying the device structure and improving the reliability of the device have arisen.

The present invention is proposed to solve the above problem and has the object of providing a disk device with an improved reliability and a simplified, more compact structure which can be used in common with a CD which is used singly and an MD which is used in a cartridge stored form.

### DISCLOSURE OF THE INVENTION

The disk device according to the present invention is provided with: a disk inner peripheral position detection means for detecting an inner peripheral position of the case-stored recording medium disk and the non-case stored recording medium disk; a displacement detection means for detecting displacement of a carriage, on which an optical pickup is provided, outside an outer periphery of the case-stored recording medium disk or the non case-stored recording medium disk using the disk inner peripheral position detection means; and a linkage mechanism for operating each section of the disk device, which cooperates with the displacement of the carriage, based on a detection result of the displacement detection means.

By such an arrangement, since it is not necessary to provided an independent mechanism for operating each section of the disk device when the carriage is displaced outwards from the outer periphery of the disk and the disk is not played, it is possible to provide a disk device with a simplified and more compact structure and with an improved reliability.

The disk device of the present invention may be provided with a switch as a disk inner peripheral position detection means, an internal state of which is switched by the carriage when the carriage is displaced to the inner peripheral position of the non case-stored recording medium disk. In this case, the displacement detection means detects the displacement of the carriage based on a direction of current supplied to a motor for driving the carriage and the internal state of the switch.

In such a way, it is possible to detect the displacement of the carriage outwards from the outer peripheral of the disk, using the disk inner peripheral position detection means which is a switch for detecting the disk inner peripheral position. Thus, it is possible to provide a disk device with a simplified, compact structure and with an improved reliability.

According to the present invention, the linkage mechanism may be adapted to operate a switching mechanism for a clutch in response to the displacement of the carriage outwards from the outer periphery of the disk.

By such an arrangement, since it is no longer necessary to provide an independent mechanism to realize the switching operation of the clutch when the carriage is displaced outwards from the outer periphery of the disk and the disk is not played, it is possible to a disk device with a simplified and more compact structure and with an improved reliability.

According to the present invention, the linkage mechanism may be adapted to operate a mechanism for opening and closing a shutter of a disk insertion mouth in response to the displacement of the carriage outwards from the outer periphery of the disk.

By such an arrangement, since it is no longer necessary to provide an independent mechanism to realize the opening and closing operation of the shutter of the disk insertion mouth when the carriage is displaced outwards from the outer periphery of the disk and the disk is not played, it is possible to provide a disk device with a simplified and more compact structure and with an improved reliability.

### BRIEF DESCRIPTION OF THE DRAWINGS

Figure 1 is a schematic figure of a conventional disk device.

Figure 2 is a view of the structure of a disk device according to a first embodiment of the present invention.

Figure 3 is an explanatory view of the relationship of the slide bar and the switch when the movable body is displaced outwards from the outer periphery of the disk in a disk device according to a first embodiment of the present invention.

Figure 4 is an explanatory view of the relationship of the slide bar, the movable body and the switch when the movable body is displaced towards the inner periphery of the disk in a disk device according to a first embodiment of the present invention.

### PREFERRED EMBODIMENTS OF THE INVENTION

In order to explain the present invention in greater detail, the preferred embodiments of the invention will be outlined below with reference to the accompanying figures.

### Embodiment 1

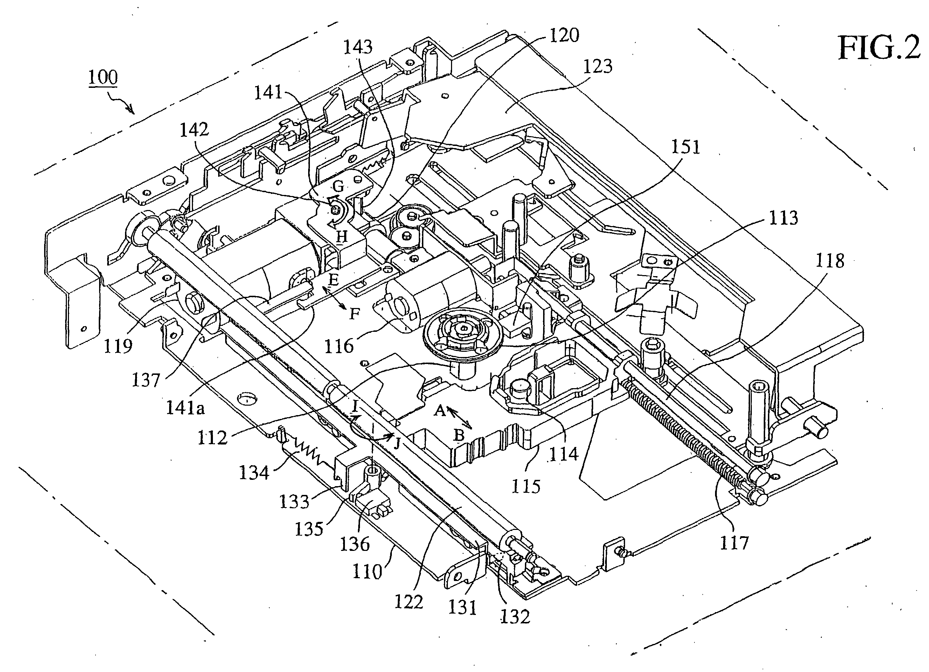

Figure 2 shows the structure of a disk device according to a first embodiment of the present invention. In the figure, 100 is a disk device which is adapted for common use with an MD and a CD, 110 is a chassis, 112 is a spindle motor, 113 is a turntable, 114 is an optical pickup, 115 is a movable body (carriage) on which the optical pickup 114 is provided. The movable body 115 can displace in the direction of the arrow B and pass outwards through the outer peripheral portion of the disk which is situated outside the play/record or play region of the CD or MD.

116 is a motor for driving the movable body 115 in the direction of the arrow A and B. 117 is a feed screw which engages with a threaded section formed on the movable body 115 and is rotated by the motor 116. The movable body 115 is displaced linearly along the feed screw 117 in the direction of the arrow A and B by rotating the feed screw 117. 118 is a guide shaft which guides the linear displacement of the movable body 115 along the feed screw 117.

119 is a motor which acts as a source of driving force for a refuge operation of the CD clamp and the CD adapter (not shown), for a loading operation of the CD onto the turntable 113 by the CD clamp and the CD adapter and for a carry-in operation of the MD holder (not shown) into the device.

120 is a clutch which switches the transmission route of the rotational force of the motor 119. The clutch 120 enables the motor 119 to be used as a drive source for the refuge operation of the CD clamp and the CD adapter, for the carry-in operation of the MD holder into the device, and for the loading operation of the CD onto the turntable 113 by the CD clamp and the CD adapter. Thus, a single motor 119 can be used in common as the drive source for respective operations. The clutch 120 has a fixed clutch tooth which is fixed on an output shaft and a movable clutch tooth which is slidable in a direction parallel to a central axis of rotation and is linked with the output rotation shaft of the motor 119. When the movable clutch tooth displaces in the direction parallel to the central axis of rotation and engages with the fixed clutch tooth, the rotation force of the motor 119 is transmitted to the output shaft. Furthermore, when the movable clutch tooth displaces in a reverse direction to the previous displacement and the engagement with the fixed clutch tooth is released, the transmission of rotation force of the motor 119 to the output shaft is also released.

122 is a feed roller for feeding a CD inserted from the CD and MD insertion mouth (not shown) into the device. 123 is an arm support member which pivotally supports the base of the CD adapter arm on the tip of which the CD adapter is formed and the base of the CD clamp arm on the tip of which the CD clamp is formed.

131 is a slide bar (displacement detection means), which is disposed under the feed roller 122 and is slidable in a direction of the arrow C and D parallel to the feed roller 122. 132 is a projecting piece (displacement detection means) formed on one end of the slide bar 131. The projecting piece 132 abuts with a portion of the movable body 115 when the movable body 115 is displaced outside the outer periphery of the CD. 133 is an operational projecting piece (displacement detection means), which is disposed in the middle of the slide bar 131 so as to project downwardly. 134 is a spring, one end of which is attached to the operational projecting piece 133 and the other end of which is attached to the chassis 110. The spring 134 urges the slide bar 131 in the direction C.

135 is a switch operation piece pivotally attached to the chassis 110. 136 is a switch (disk inner peripheral position detection means) for detecting an inner peripheral position of the CD. 151 is a switch for detecting an inner peripheral position of the MD. When the movable body 115 displaces in the direction A towards the inner peripheral position of the CD, an end of the switch operational piece 135 situated on an inner side of the device is pressed in the direction A by a portion of the movable body 115. As a result, the switch operational piece 135 rotates in a direction of the arrow J and an another end of the switch operation piece 135 situated on an outer side of the device depresses the actuator of the switch 136. Thus, the state of the switch 136 is switched.

The actuator of the switch 136 is adapted to be depressed directly by the operational projecting piece 133 through the switch operational piece 135 even if the slide bar 131 slides in the direction of the arrow D. Furthermore, when the movable body 115 displaces to the inner peripheral position of the MD in the direction A, the actuator of the switch 151 is depressed by a portion of the movable body 115 and the switch 151 is switched.

Thus, based on the direction of current supplied to the motor 116 when the actuator of the switch 136 or the switch 151 is depressed, it is possible to detect that the movable body 115 is situated at an inner peripheral position of the CD or MD, or that the movable body 115 is displaced outside the outer periphery of the CD or MD.

137 is an operational projection formed on the other end of the slide bar 131 so as to extend towards the interior of the device. 141 is a rotating member (linkage mechanism) for operating the clutch, which is adapted to be rotatable in the direction of the arrow G and H about the axis 142. One end 141a of the rotating member 141 engages with the tip of the operational projection 137. A clutch operation shaft 143 is formed on the other end of the rotation member 141. The tip of the clutch operation shaft 143 engages with the movable clutch tooth of the clutch 120. The movable clutch tooth is adapted to displace towards the fixed clutch tooth along its rotation axis by the displacement of the clutch operational shaft 143 in the direction H. The movable clutch tooth is also adapted to displace in a direction away from the fixed clutch tooth by the displacement of the clutch operational shaft 143 in the direction G.

Next, the operation of the disk device according to the present invention will be explained.

When an MD is inserted into the disk device from the CD and MD insertion mouth (not shown), the inserted MD is carried into the device and set on the turntable 113. At this time, the CD clamp and the CD adapter are refuged in a position where the CD clamp and the CD adapter do not interfere with the MD set on the turntable, for example in a predetermined position situated at the back of the device.

On the other hand, when an CD is inserted into the disk device from the CD and MD insertion mouth, the inserted CD is carried into the device by the feed roller 122, its rotational center is gripped by the CD clamp and the CD adapter. The inserted CD is placed on the turntable 113 in that state.

When the inserted recording medium disk is a CD, the inserted CD is rotated on the turntable 113 and information is read by an optical pickup 114 provided on the movable body 115, which displaces in the direction B. Thus, the CD may be recorded/played or played.

On the other hand, when the inserted recording medium disk is an MD, an aperture provided in the case of the inserted MD is opened, the recording medium disk housed in the case is rotated by the turntable 113, and information is read through the aperture by the optical pickup 114 provided on the movable body 115 which displaces in the direction B. Thus, the MD may be recorded/played or played.

The movable body 115 can displace outside the record/play or play region of the CD or MD and outside the outer periphery of the disk. _Therefore, in the disk device according to the first embodiment, the projecting piece 132 is pressed by a portion of the movable body 115 which is displaced outside the outer periphery of the CD or MD, the slide bar 131 slides in the direction D, and the switch 136 is switched. Thus, it is possible to detect from the direction of current flowing in the motor 116 that the movable body 115 is situated outside the outer periphery of the disk.

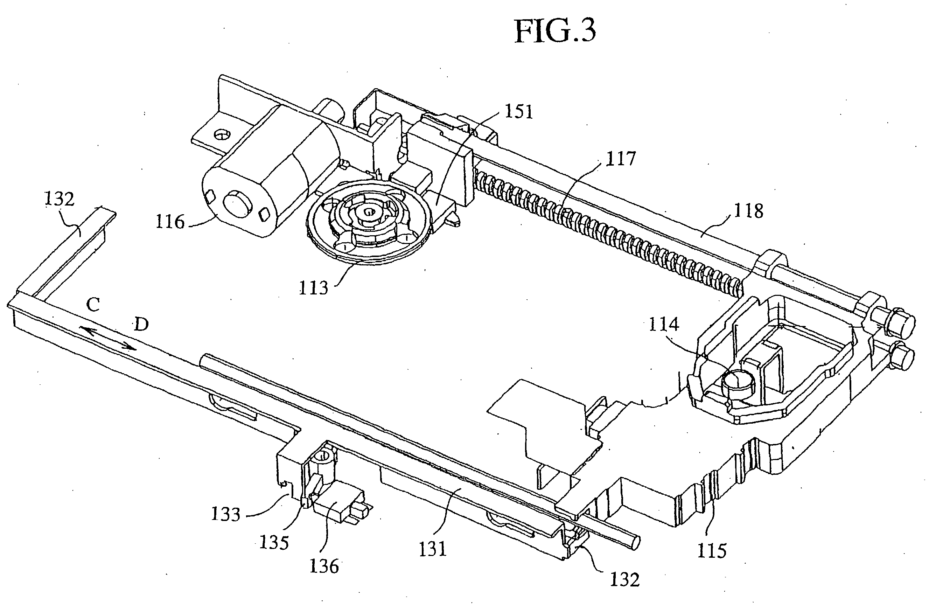

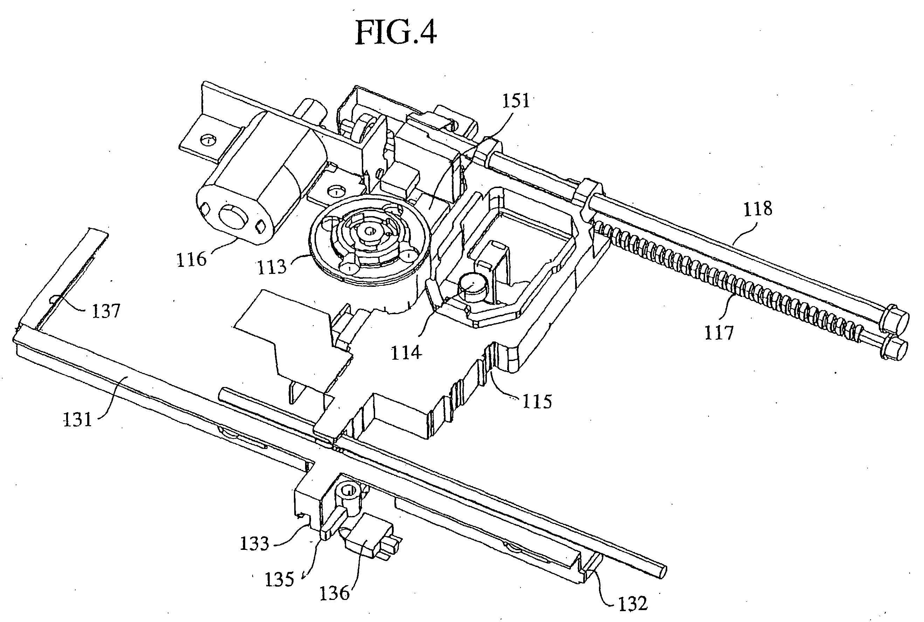

Figure 3 is an explanatory view showing the relationship of the slide bar 131 and the switch136 when the movable body 115 is displaced outside the outer periphery of the disk. Figure 4 is an explanatory view showing the relationship of the slide bar 131, the movable body 115 and the switch 136 when the movable body 115 is displaced near the inner peripheral position of the disk.

Further, the movable body 115, which is displaced outside the outer periphery of the CD or MD, presses the projecting piece 132 by a portion thereof, as a result, the slide bar 131 slides in the direction D thereby to switch the clutch 120.

That is to say, by the sliding movement of the slide bar 131 in the direction D, the operational projection 137 is displaced in the direction D, an end 141a of the rotating member 141 which engages with the tip of the operational projection 137 is pressed in the direction F, and the rotating member 141 is rotated in the direction G. Since the tip of the clutch operation shaft 143 which is formed on the other end of the rotating member 141 engages with the movable clutch tooth of the clutch 120, the movable clutch tooth displaces in a direction away from the fixed clutch tooth along the central axis of rotation due to the displacement of the clutch operational shaft 143 in the direction G. As a result, the engagement of the movable clutch tooth with the fixed clutch tooth is released.

When a portion of the movable body 115 does not press the projecting piece 132, the slide bar 131 is displaced in the direction C by the spring 134. Thus, an end 141a of the rotating member 141 is pressed in the direction E and the rotating member 141 rotates in the direction H. As a result, the clutch operational shaft 143 displaces in the direction H, the movable clutch tooth displaces in a direction towards the fixed clutch tooth along the central axis of rotation, and the movable clutch tooth engages with the fixed clutch tooth.

In the explanation above, the clutch 120 is switched by the displacement of the movable body 115 outside the outer periphery of the CD or MD. However, this is not limited in the switching of the clutch 120. For example, this may be applied to the opening and closing operation of the shutter provided on the CD and MD insertion mouth or to an operation of any component relating to the displacement of the movable body 115 outside the outer periphery of the CD or MD.

Further, in the explanation above, the present invention is directed to a disk device which can be used in common with a non case-stored recording medium disk and a case-stored recording medium disk which is housed in a disk case. However, the present invention may be adapted to a disk device for non case-stored recording medium disk or to a disk device for case-stored recording medium disk.

Furthermore, in the explanation above, the disk device is adapted to detect the displacement of the movable body 115 outside an outer periphery of the MD or CD using a switch 136 for detecting an inner peripheral position of the CD. However, instead of the switch 136 detecting the inner peripheral position of the CD, it is possible to use a switch 151 for detecting an inner peripheral position of the MD or to provide a switch for detecting an outer peripheral position of the disk.

As shown above, according to the first embodiment of the present invention, it is possible to switch the clutch 120 by displacing the movable body 115 outside an outer periphery of a CD or MD. Thus, it is not necessary to provide an independent mechanism to switch the clutch 120. As a result, it is possible to provide a disk device with a simplified, compact structure and with an improved reliability.

Further, since it is possible to detect whether a movable body 115 is in an inner peripheral position of the CD or whether the movable body 115 is situated outside of an outer periphery of the CD or MD based on the direction of current flowing in the motor 116 when the switch 136 is switched, it is possible to generate a suitable or necessary operation from the displacement of the movable body 115 in accordance with the position of the movable body 115.

### INDUSTRIAL APPLICABILITY

As shown above, the disk device of the present invention is adapted for use as a vehicle-mounted disk device which can be used in common with a CD used as a single disk and with an MD used in cartridge stored form.

## Claims

1. A disk device capable of loading and ejecting at different times on a turntable a case-stored recording medium disk stored in a disk case and a non case-stored recording medium disk not stored in a disk case and used as a single disk, said disk device being capable of playing and recording or capable of only playing either of said case stored recording medium disk or said non-case stored recording medium disk, said disk device comprising:
a disk inner peripheral position detection means for detecting an inner peripheral position of the case-stored recording medium disk and the non-case stored recording medium disk;
a displacement detection means for detecting displacement of a carriage, on which an optical pickup is provided, outside an outer periphery of the case-stored recording medium disk or the non case-stored recording medium disk; and
a linkage mechanism for operating each section of the disk device, which cooperates with said displacement of the carriage, based on a detection result of said displacement detection means.

2. A disk device according to Claim 1, wherein said disk inner peripheral position detection means comprises a switch, an internal state of which is switched by the carriage when the carriage is displaced to the inner peripheral position of the non case-stored recording medium disk, and wherein said displacement detection means detects said displacement of the carriage based on a direction of current supplied to a motor for driving said carriage and the internal state of said switch.

3. A disk device according to Claim 2, wherein said linkage mechanism operates a switching mechanism for a clutch in response to said displacement of the carriage.

4. A disk device according to Claim 2, wherein said linkage mechanism operates a mechanism for opening and closing a shutter of a disk insertion mouth in response to said displacement of the carriage.
